Europäisches Patentamt

European Patent Office

Office européen des brevets

(11) Publication number: **0 251 666 B1**

(12) **EUROPEAN PATENT SPECIFICATION**

(45) Date of publication of patent specification: **31.03.93** (51) Int. Cl.⁵: **G11B 27/32**, G06F 3/08, G11B 7/013, G11B 20/12, G11B 19/02

(21) Application number: **87305599.0**

(22) Date of filing: **23.06.87**

(54) Apparatus for recording and reproducing information.

(30) Priority: **23.06.86 JP 147800/86**

(43) Date of publication of application:
**07.01.88 Bulletin 88/01**

(45) Publication of the grant of the patent:
**31.03.93 Bulletin 93/13**

(84) Designated Contracting States:
**DE FR GB IT NL**

(56) References cited:
**WO-A-85/03587
BE-A- 881 527
DE-A- 2 104 906
FR-A- 2 339 208**

(73) Proprietor: **CANON KABUSHIKI KAISHA
30-2, 3-chome, Shimomaruko, Ohta-ku
Tokyo(JP)**

(72) Inventor: **Sakagami, Wataru
17-11 Nakahara 3-chome Isogu-ku
Yokohama-shi Kanagawa-ken(JP)**

(74) Representative: **Beresford, Keith Denis Lewis
et al
BERESFORD & Co. 2-5 Warwick Court High
Holborn
London WC1R 5DJ (GB)**

**Description**

BACKGROUND OF THE INVENTION

The present invention relates to an information recording and reproducing apparatus.

Related Background Art

Hitherto, as a form of medium in which information is recorded using a light, various kinds of disk-shaped medium, card-shaped medium, and the like have been known. Among them, a card-shaped optical information recording medium (hereinafter, referred to as an optical card) is a small-sized and light-weighted portable medium having a large recording capacity; therefore, a large demand of this medium is expected.

In the above optical card, a recording signal is modulated in accordance with recording information, a laser beam focused to a microspot scans the optical card, thereby enabling information to be recorded as a recording pit train which can be optically detected.

As an apparatus for recording and reproducing information into/from a card in this manner, an apparatus disclosed in our Patent Application GB 2170632A has been applied.

An optical recording and reproducing medium (hereinafter, referred to as an optical card), in particular, an unerasable write-once type optical card has dimensions corresponding to a credit card size and has a large memory capacity. The dimensions of such a card are about 85 mm × 55 mm. Now, assuming that an information track pitch is 20 $\mu$m and a recording length of one bit is 5 $\mu$m,

number of tracks = 55 mm × (1000 ÷ 20) = 2750,
bit capacity/track = 85 × (1000 ÷ 5) = 17000 bits,
byte capacity/track = 17000 ÷ 8 ≒ 2000 bytes.

Therefore, the whole data capacity is

2750 × 2000 = 5,500,000 = 5.5 MB.

In order to manage information of such a large capacity, it is necessary to take a measure to manage recording information by directories similarly to a floppy disk. A directory is information indicating at which position which data is recorded. However, in the case of a write-once type recording medium in which information is recorded in a single direction for the arranging direction of tracks, directory information is hidden between data tracks, so that it is difficult to extract only a directory.

Moreover, in the case of forming information tracks by reciprocating a card, there is a problem such that it is difficult to control. Therefore, it is hard to provide a plurality of independent information recording sections for a single track.

To eliminate the foregoing drawbacks, in Japanese Patent Application Laid-Open No 279957/1986, there has been disclosed a method whereby directory information and data to be recorded are separately recorded from a track having a small track number and from a track having a large track number. However, in this method, since a directory area in one track is not divisionally managed, there is a fear such that it is difficult to search an unrecorded area when a next directory is added.

SUMMARY OF THE INVENTION

According to the present invention an information recording apparatus of the kind comprising: (i) means for optically recording data tracks on an optical card; (ii) means for optically recording directory tracks separate from the data tracks on the optical card; (iii) means for optically reading the data recorded on the data tracks and the directory tracks; is characterised in that the recording means is adapted in use to: a) record data on non-formatted directory tracks; b) detect the number of units of information in each directory track; and c) control the further recording of directory information in a directory track in accordance with the detected number of units in such a way that adjacent directories do not overlap and there is a predetermined interval between adjacent directories.

According to the present invention an information recording method of the kind comprising: (i) the step of optically recording data tracks on an optical card; (ii) the step of optically recording directory tracks separate from the data tracks on the optical card; (iii) the step of optically reading the data recorded on the data tracks and the directory tracks; is characterised in that: a) the data is recorded on non-formatted directory tracks; b) the number of units of information in each directory track is detected; and c) the further recording of directory information in a directory track is controlled in accordance with the detected number of units in such a way that adjacent directories do not overlap and there is a predetermined interval between adjacent directories.

BRIEF DESCRIPTION OF THE DRAWINGS

Figs. 1A and 1B are block diagrams showing a constitution of an information recording and reproducing apparatus;

Fig. 2 is a block diagram showing a constitution of a modulator-demodulator circuit;

Fig. 3 is a diagram showing an outline of a recording format of an optical card;

Fig. 4 is a time chart showing a signal when a directory is recorded;

Fig. 5 is a flowchart showing the control operation when a directory is recorded;

Fig. 6 is a diagram showing a motion of an optical head when a directory is recorded;

Fig. 7 is a detailed diagram showing a part of Fig. 1B; and

Fig. 8 is a time chart of each signal shown in Fig. 7.

## DETAIL DESCRIPTION OF A PREFERRED EMBODIMENT

An embodiment of the present invention will be described in detail hereinbelow with reference to the drawings.

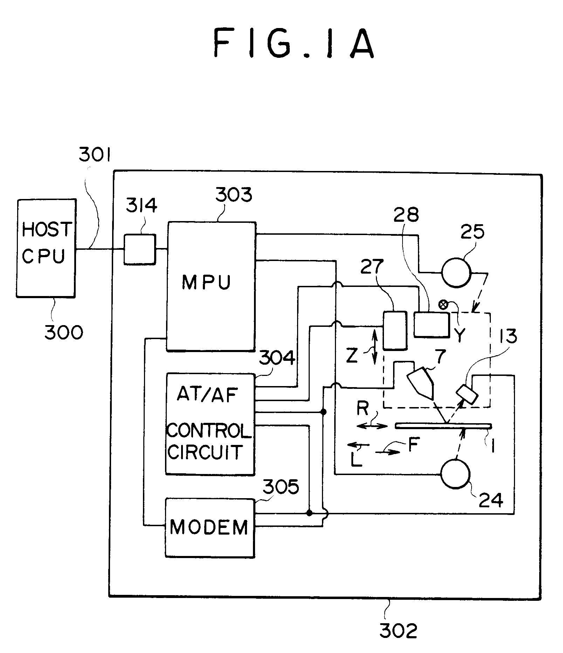

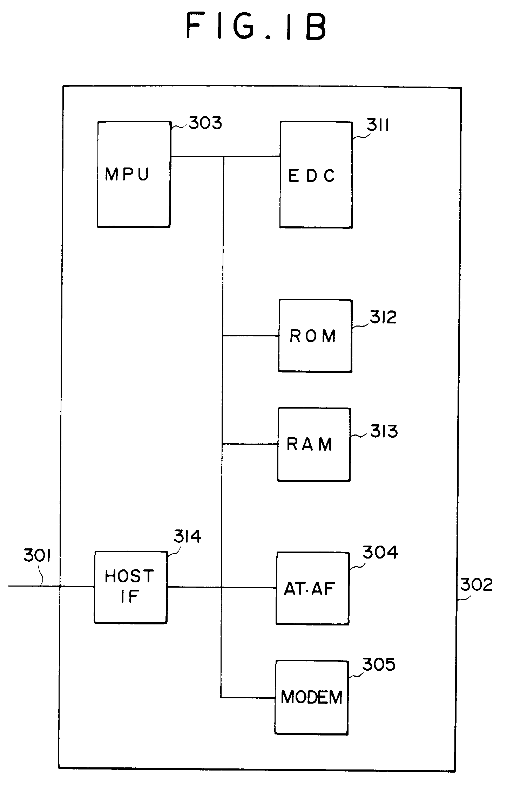

Figs. 1A and 1B are block diagrams showing a constitution of an optical information recording and reproducing apparatus using an optical card.

An information recording and reproducing apparatus (hereinafter, referred to as a drive) 302 is connected to a host control unit (hereinafter, referred to as a host CPU) 300 and performs communication of data between the drive 302 and the host CPU 300 through an interface 314, control, and the like. An MPU 303 in the drive 302 includes an ROM 312 and an RAM 313 and mainly controls a card feed motor 24 and a head feed motor 25. A control program and control data are stored in the ROM 312. An AT/AF (auto tracking/auto focusing) control circuit 304 receives a signal from a photo detector 13 and drives an AF actuator 27 and an AT actuator 28. A modulator-demodulator circuit (hereinafter, referred to as an MODEM) 305 changes a light emission intensity of a light source 7 in the recording mode, thereby allowing the recording operation to be executed. The MODEM 305 demodulates data in the reproducing mode on the basis of the detection signal of the photo detector 13.

Numeral 311 denotes a circuit to detect and correct error of data to be recorded into a card 1 or an error of the data read out of the card 1. Numeral 301 denotes a signal line to connect the host CPU 300 with the drive 302.

In order to accurately record and reproduce information without causing a trouble such as a crossing of information tracks 106 (106a, 106b, ...) or the like, the AT/AF control circuit 304 controls the irradiating position of the laser beam in the direction perpendicular to the scanning direction (this control is the auto tracking and is referred to as an AT hereinafter). On the other hand, in order to stably irradiate a microspot irrespective of the bending of an optical card and a mechanical error, the AT/AF control circuit 304 controls the irradiating position of the laser beam in the direction perpendicular to the optical card (this control is the auto focusing and is referred to as an AF hereinafter).

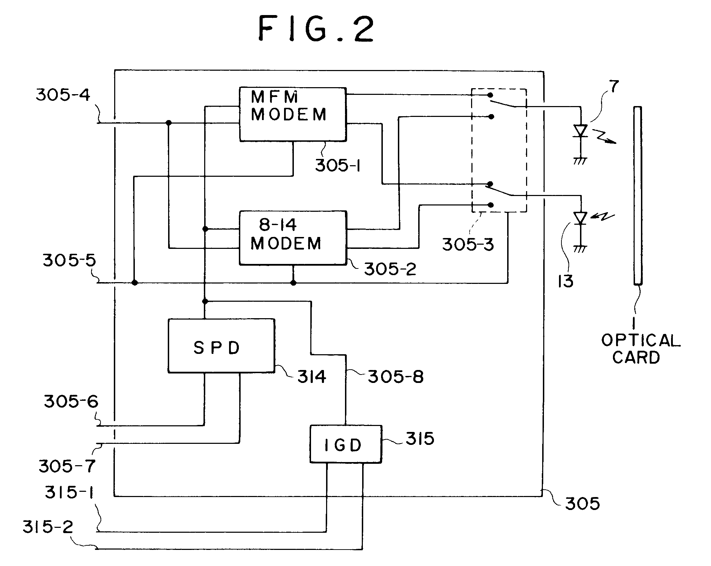

Fig. 2 is a detailed explanatory diagram of the modulator-demodulator circuit MODEM 305 (hereinafter, also referred to as an R/W circuit), which will be explained in Figs. 1A and 1B. Reference numeral 305-1 denotes a modulator-demodulator circuit for modified frequency modulation (MFM-MODEM) and 305-2 indicates an 8-14 modulator-demodulator circuit ( 8-14 MODEM). The MPU 303 controls a switching signal 305-5 and switches a switch 305-3 in accordance with the kind of optical card.

For example, when the switching signal 3 5-5 is at the high level, the MFM-MODEM 305-1 is selected. When it is at the low level, the 8-14 MODEM 305-2 is selected.

A recording signal 305-4 from the MPU 303 is supplied to the MFM-MODEM 305-1 and 8-14 MODEM 305-2 and modulated. The modulated signals drive an optical device (laser diode) 7. A demodulation signal 305-8 is a bit-serial signal. Either the MFM-MODEM 305-1 or the 8-14 MODEM 305-2 is selected by the switching signal 305-5. The selected demodulation signal is supplied to a sync signal detecting circuit 314 (hereinafter, referred to as an SPD) and a gap detector 315 (hereinafter, referred to as an IGD) to detect a gap in the directory section in one track.

Numeral 315-1 denotes a signal indicative of a directory section, and 315-2 denotes a signal indicative of a gap between directories.

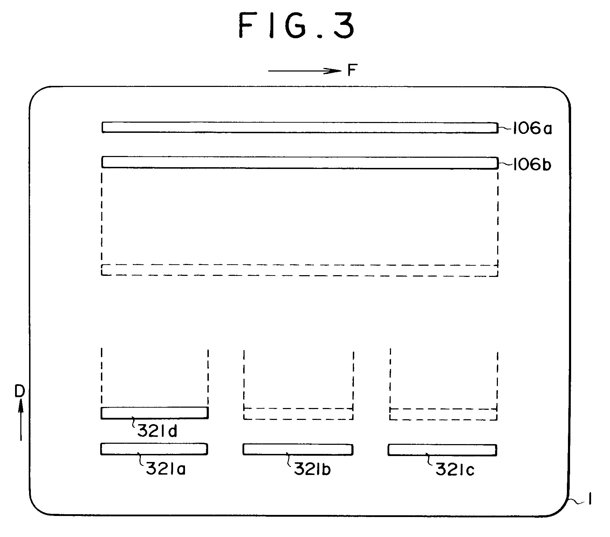

Fig. 3 shows an embodiment of an optical card to which the invention is applied. A directory section 321 (321a, 321b, 321c, 321d, ...) is sequentially written from the direction indicated by an arrow D. The data section 106 (106a, 106b, ...) is written in the direction opposite to the arrow D. Data is recorded in the direction of an arrow F.

In general, information necessary for a directory is very much shorter than a length of information which is written into the data track section. Therefore, in the case of writing only one directory into one track, if the number of directories is large, a waste of reading space results. To eliminate this drawback, it is necessary to write a plurality of directories into one track.

However, if an address is added to each directory and the directories are managed, the system becomes complicated and the manufacturing cost of the recording medium also increases.

Therefore, according to the invention, a directory is written by a method whereby an address management in a single track is not performed.

When an optical card is inserted into the apparatus, it is examined to find out which of the tracks in the data area 106 and the directory area 321 have had information recorded on them and these track numbers are stored.

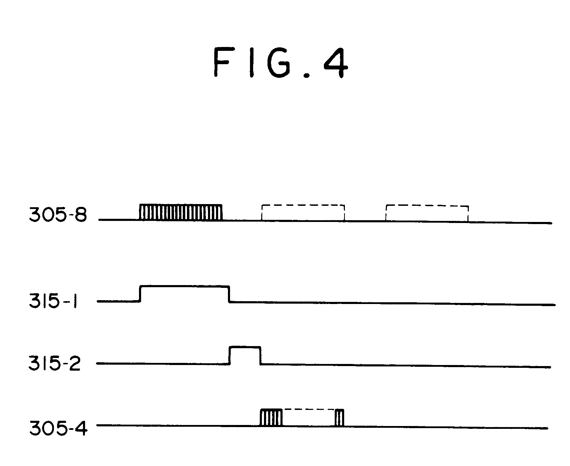

When a new directory is to be written, the data recorded in a directory track 321d is first read in the direction F for the whole length of card. Thus, the outputs 315-1 and 315-2 of the IGD 315 in Fig. 2 are as shown in Fig. 4. Namely, the signal 315-1 is set to the high level for the portion in which the demodulation signal 305-8 was output (i.e., the portion in which data has been recorded). This constitution is realized by, for example, a one-shot multivibrator which can be retriggered. On the other hand, the signal 315-2 is set to the high level for a constant time in response to a detection of a trailing edge of the signal 315-1.

The MPU 303 detects the number of directories written in one track by measuring the number of pulses in signal 315-1. In the case of the example of Fig. 3, one directory has been written. If three directories were written, the number is 3. If no directory is written, the number is 0.

When writing, after the directory has been read out the track is not changed but again scanned in the F direction. Similarly to the case where the directory was read out, the signals 315-1 and 315-2 in Fig. 4 appear. In this example, since one directory is written, the writing operation of new directory information is started when the signal 315-2 is set to the low level.

By the foregoing method, a plurality of directories can be written into one track.

In the foregoing example, an interval between directories has been specified by the signal 315-2. However, it is more accurate and preferable to obtain a predetermined interval by counting the number of pulses from the trailing edge of the signal 315-1 by use of an encoder output pulse which is interlocked with a medium feed motor.

On the other hand, since the position in one track at which directory information is recorded is almost determined, it is also possible to obtain a timing to start the recording by counting the encoder pulses after the head of track was detected. The head of track can be decided by detecting the track number which has previously been recorded in the head of each track.

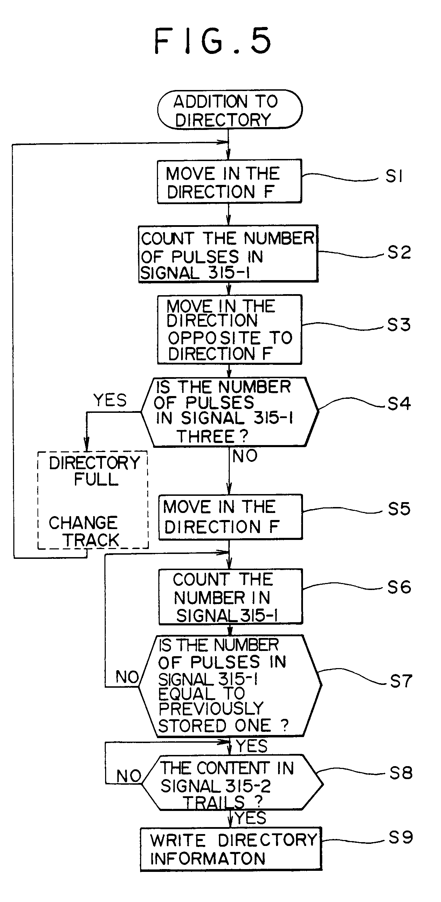

The foregoing operations will be explained with reference to a flowchart of Fig. 5. First, a track in which directory information is recorded is scanned in the F direction (step 1). By counting the number of pulses in signal 315-1, the number of directories is deleted and stored in the RAM (step 2). After the track has been scanned with F direction it is scanned in the direction opposite to the F direction (step 3). If the number of pulses in signal 315-1 is 3, it is determined that no directory can be written into this track and the adjacent track is scanned (steps 4 and 5). If the number of pulses in signal 315-1 is less than 3, the same track is again scanned in the F direction (step 5). The number of pulses in signal 315-1 is counted (step 6). If the number of pulses in signal 315-1 coincides with the number stored and the trailing edge of the signal 315-2 has been detected (steps 7 and 8), the recording of the directory information is started (step 9). In place of detecting the number of pulses in signal 315-1, the number of pulses in signal 315-2 may be also detected.

As described above, the number of directories or gaps is detected before a new directory is written and if the number of directories or gaps detected coincides with the stored number in the writing mode, the writing operation is started. In this manner, a directory can be written with certainty.

Further, after a new directory has been written the written directory is read out and an error check is performed. After completion of the error check, if an error has been detected, by again recording the directory in the next directory section the reliability of the directory data can be improved.

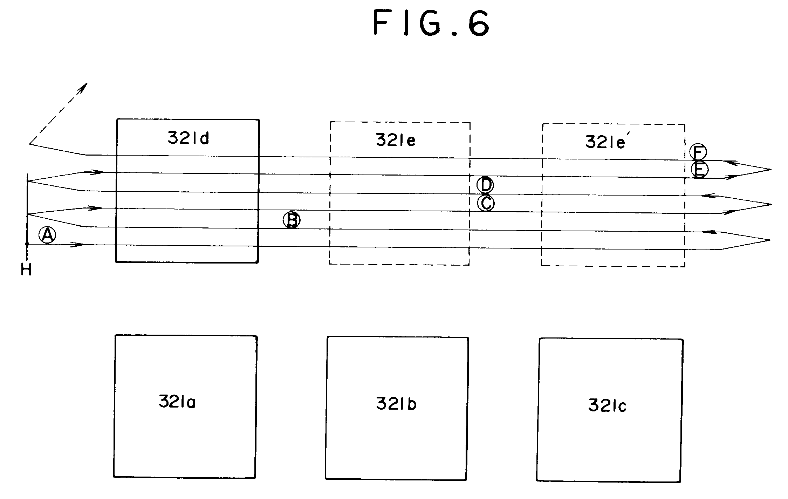

The operation when an error has been detected and the moving position of a laser beam will now be explained with reference to Fig. 6. At first, the laser beam is located at point H and progresses in the directions indicated by arrows. Ⓐ: The number of gaps is counted. Ⓑ : The laser beam is returned to the point H. Ⓒ : When the laser beam has reached the position at 312e, the directory is recorded as 321e. Ⓓ : An error of the directory 321e is checked. If an error has been detected, Ⓔ :the directory is again written at the position of 321e'. Ⓕ : An error of the directory 321e' is checked.

The above operations will now be further described in detail.

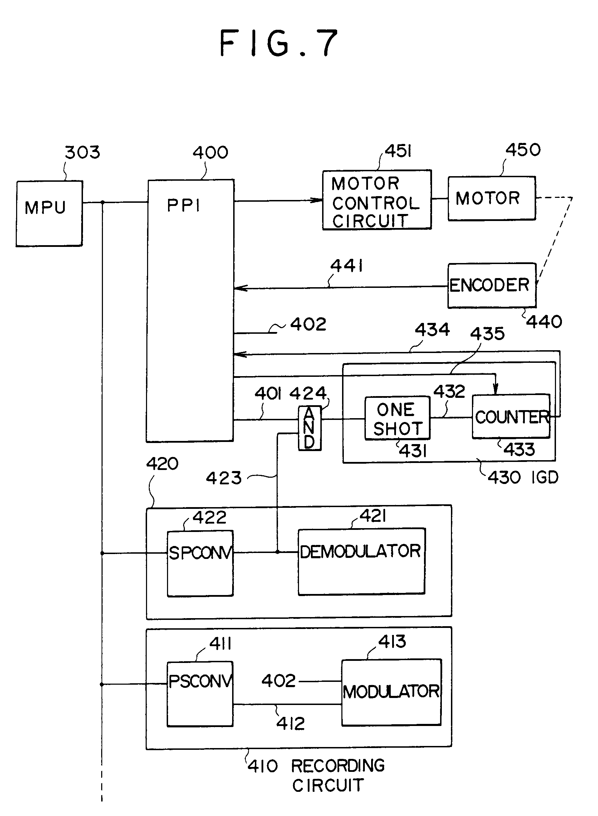

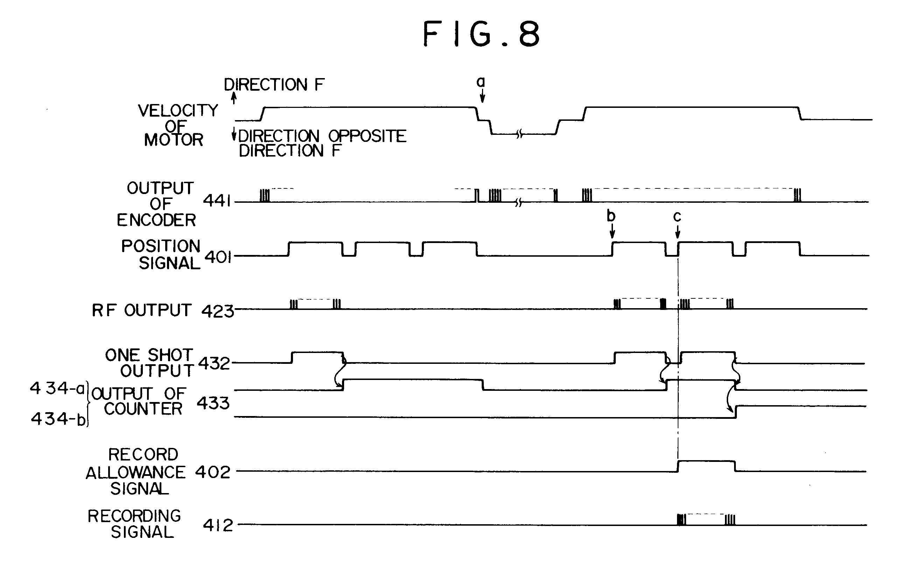

An embodiment using an encoder synchronized with the card feeding operation will be described with reference to Figs. 7 and 8. Fig.7 shows a partial detailed diagram of Fig.1B. An LSI (PPI) 400 to control peripheral terminals is connected to the MPU 303. A motor control circuit 451 is connected to the PPI 400. An encoder output signal 441 from an encoder 440 attached to a motor 450, a counter output 434 of a counter 433, and a signal 435 to reset the counter 433 are also connected to the PPI 400. Further, a recording circuit 410 to control data for recording data from the RAM 313 into the card 1 is connected to the MPU 303. The recording circuit 410 comprises: a parallel/serial converter (PSCONV) 411 to convert parallel data into serial data and a modulator 413. A reproducing circuit 420 to reproduce the data recorded in the card is also connected to the MPU 303. The reproducing circuit 420 comprises: a demodulator 421 to demodulate the signal from the photo detector; and a serial/parallel converter (SPCONV) 422 to convert the serial data into the parallel data. A gap detecting circuit (IGD) 430 comprises: a one-shot multivibrator 431; and a counter 433 to count the output of the one-shot multivibrator 431. Fig. 8 is a timing chart showing a signal of each section in Fig.7. An explanation will now be made hereinbelow with respect to the case where a directory is written into the track in which one directory shown in Figs. 3 and 6 has already been recorded.

When the card is fed in the F direction, the encoder output signal 441 is counted. When the count value falls within a range of 500 to 2000, 2500 to 4000, or 4500 to 6000, a signal 401 shown in Fig. 8 is changed and set to "1" in this case.

When the laser spot is located at the point H in Fig. 6, if the card is fed in the F direction, the encorder output signal 441 is output. Therefore, the MPU 303 counts this output and generates as the signal 401 for a predetermined period of time. The information recorded in the card 1 is demodulated by the demodulator 421 as an RF output signal 423. Only when the signal 401 is set to "1", the RF output signal 423 is used as trigger signal of the one-shot multivibrator 431 by AND gate 424. Since the one-shot multivibrator 431 can be retriggered, a one shot output signal 432 has a form such that the intermittent RF output signal 423 was integrated. The counter 433 counts up in response to the trailing edge of the one shot output signal 432. Namely, in the example of Fig. 6, since only a single directory (321d) is recorded, the RF output signal 423 is output when the laser spot scans the directory 321d. When the motor is stopped (point a in Fig. 8), only a single one shot output signal 432 is output, so that the count value of the counter 433 is 1. The MPU 303 stores the count value of the counter 433 as a previous count value and at the same time, the MPU 303 outputs a counter reset signal 435 to thereby reset the counter 433. The number of directories recorded in the present track is specified by the above operation. Subsequently, the MPU 303 feeds the card in the direction opposite to the F direction and returns the laser spot to the point H in Fig. 6.

The card is then fed in the F direction and the writing operation is started. In the writing operation, the content of the counter 433 is read out at the timing when the signal 401 was set to "1" and compared with the previous count value. No process is performed at point b in Fig. 8 since the count value of the counter 433 is 0 because the counter was reset. The counter value of the counter 433 coincides with the previous count value at point c in Fig. 8 because the count value is 1. When these count values coincide, a signal 402 is set to "1" and information to be recorded is transferred from the RAM 313 to the recording circuit 410 and record into the card. Although the signal 402 is connected in the recording circuit 410 in Fig. 7, this signal is used as a record allowance signal of a modulator 413.

The writing operation in the same track is finished by the foregoing operations. Next, a verification and the like of the recorded information are executed. However, since these processes have already been described, they are omitted here.

In the embodiment, the recording position is controlled on the basis of the number of pulses of the encoder. Therefore, when a directory is written, it can be also recorded when the card is fed from the point a in Fig. 8 in the direction opposite to the F direction, thereby enabling a high processing speed to be realized.

Thus, in accordance with the invention there is provided an information recording apparatus comprising means to receive a plurality of pieces of data information to be recorded in a plurality of tracks on a recording medium; means for generating a plurality of pieces of management information relating to the management of the data information on the recording medium; and means for recording the data information and management information on the recording medium. One aspect of the invention is characterised in that the recording of a piece of the management information on a track is controlled in accordance with the number of pieces of management information already recorded on that track Another aspect of the invention is characterised in that the pieces of management information are recorded without any track address therefor.

**Claims**

1.  An information recording apparatus of the kind comprising:

    (i) means (303, 305, 7) for optically recording data tracks on an optical card;

    (ii) means (303, 305, 7) for optically recording directory tracks separate from the data tracks on the optical card;

    (iii) means (13, 305, 303) for optically reading the data recorded on the data tracks and the directory tracks;

    characterised in that the recording means is adapted in use to:

    a) record data on non-formatted directory tracks;

    b) detect (315) the number of units of information in each directory track; and

c) control (303) the further recording of directory information in a directory track in accordance with the detected number of units in such a way that adjacent directories do not overlap and there is a predetermined interval between adjacent directories.

2. An apparatus according to claim 1, wherein said control means directs said recording means to record a directory information at a position spaced a predetermined distance from a directory information previously recorded on the recording medium.

3. An apparatus according to claim 1, wherein said detecting means counts the number of directory information recorded on a single track.

4. An apparatus according to claim 1, wherein said detecting means counts the number of gaps among said directory information recorded on a single track.

5. An apparatus according to claim 1, wherein the directory information unit includes address information indicating which information recording track the data output from said first output means has been stored in.

6. An apparatus according to claim 1, wherein, when the number of the directory information units recorded in a single track is less than a predetermined number, said control means causes said recording means to record a directory information in said track.

7. An apparatus according to claim 6, wherein said control means causes said detecting means to scan the track, and causes said recording means to record the directory information after setting gap of the predetermined distance in case that the number of the directory information in the track detected during the scanning operation coincides with a predetermined number.

8. An apparatus according to claim 1, wherein when the number of the directory information recorded in a single track is a predetermined number, said control means causes said recording means to record the directory information in a different track.

9. An apparatus according to claim 8, wherein said control means causes said recording means to record the directory information at the head of the different track.

10. An apparatus according to claim 1, wherein said control means, after directing said recording means to record the directory information, reproduces the recorded directory information and detects whether or not an error is present.

11. An apparatus according to claim 1, further comprising driving means (24,450,451) for driving the recording medium, generating means (440) for generating a synchro signal which is in synchronized with the operation of said driving means, and counting means (303) for counting the synchro signal, wherein said control means causes said recording means to produce the predetermined distance on the basis of the output of said counting means.

12. An apparatus according to claim 1, wherein said recording means records data by reciprocating the recording medium.

13. An apparatus according to claim 1, wherein the recording medium has a card-like shape.

14. An information recording method of the kind comprising:
    (i) the step of optically recording data tracks on an optical card;
    (ii) the step of optically recording directory tracks separate from the data tracks on the optical card;
    (iii) the step of optically reading the data recorded on the data tracks and the directory tracks;
    characterised in that:
    a) the data is recorded on non-formatted directory tracks;
    b) the number of units of information in each directory track is detected; and
    c) the further recording of directory information in a directory track is controlled in accordance with the detected number of units in such a way that adjacent directories do not overlap and there is a predetermined interval between adjacent directories.

15. An optical card recorded by the apparatus of claim 1 or the method of claim 14.

**Patentansprüche**

1. Informationsaufzeichnungsgerät mit
    (i) einer Einrichtung (303, 305, 7) zum optischen Aufzeichnen von Datenspuren auf einer optischen Karte,
    (ii) einer Einrichtung (303, 305, 7) zum optischen Aufzeichnen von von den Datenspuren getrennten Leitinformationsspuren auf der optischen Karte und

(iii) einer Einrichtung (13, 305, 303) zum optischen Lesen der auf den Datenspuren und den Leitinformationsspuren aufgezeichneten Daten,

**dadurch gekennzeichnet,** daß die Aufzeichnungseinrichtung

a) zum Aufzeichnen von Daten auf nichtformatierten Leitinformationsspuren,

b) zum Erfassen (315) der Anzahl von Einheiten von Informationen auf jeder Leitinformationsspur und

c) zum Steuern (303) der weiteren Aufzeichnung von Leitinformationen auf einer Leitinformationsspur entsprechend der erfaßten Anzahl von Einheiten in der Weise gestaltet ist, daß benachbarte Leitinformationen einander nicht überlappen und daß zwischen benachbarten Leitinformationen ein vorbestimmter Abstand liegt.

2. Gerät nach Anspruch 1, in dem die Steuereinrichtung die Aufzeichnungseinrichtung zum Aufzeichnen einer Leitinformation an einer Stelle steuert, die um einen vorbestimmten Abstand von einer zuvor auf dem Aufzeichnungsträger aufgezeichneten Leitinformation beabstandet ist.

3. Gerät nach Anspruch 1, in dem die Erfassungseinrichtung die Anzahl der auf einer einzelnen Spur aufgezeichneten Leitinformationen zählt.

4. Gerät nach Anspruch 1, in dem die Erfassungseinrichtung die Anzahl von Lücken zwischen den auf einer einzigen Spur aufgezeichneten Leitinformationen zählt.

5. Gerät nach Anspruch 1, in dem die Leitinformationseinheit eine Adresseninformation enthält, die anzeigt, in welcher Informationsaufzeichnungsspur die von der ersten Ausgabeeinrichtung abgegebenen Daten gespeichert sind.

6. Gerät nach Anspruch 1, in dem dann, wenn die Anzahl der auf einer einzigen Spur aufgezeichneten Leitinformationseinheiten geringer als eine vorbestimmte Anzahl ist, die Steuereinrichtung bewirkt, daß die Aufzeichnungseinrichtung eine Leitinformation auf dieser Spur aufzeichnet.

7. Gerät nach Anspruch 6, in dem die Steuereinrichtung bewirkt, daß die Erfassungseinrichtung die Spur abtastet, und die Aufzeichnungseinrichtung in dem Fall, daß die Anzahl der während des Abtastens erfaßten Leitinformationen auf der Spur mit einer vorbestimmten Anzahl übereinstimmt, die Leitinformation nach dem Einstellen einer Lücke mit einem vorbestimmten Abstand aufzeichnet.

8. Gerät nach Anspruch 1, in dem dann, wenn die Anzahl der auf einer einzelnen Spur aufgezeichneten Leitinformationen eine vorbestimmte Anzahl ist, die Steuereinrichtung bewirkt, daß die Aufzeichnungseinrichtung die Leitinformation auf einer anderen Spur aufzeichnet.

9. Gerät nach Anspruch 8, in dem die Steuereinrichtung bewirkt, daß die Aufzeichnungseinrichtung die Leitinformation an dem Kopf der anderen Spur aufzeichnet.

10. Gerät nach Anspruch 1, in dem die Steuereinrichtung nach dem Steuern der Aufzeichnungseinrichtung zum Aufzeichnen der Leitinformation die aufgezeichnete Leitinformation reproduziert und ermittelt, ob ein Fehler vorliegt oder nicht.

11. Gerät nach Anspruch 1, das ferner eine Antriebsvorrichtung (24, 450, 451) für den Antrieb des Aufzeichnungsträgers, eine Generatoreinrichtung (440) zum Erzeugen eines Synchronsignals, das mit der Funktion der Antriebsvorrichtung synchronisiert ist, und eine Zähleinrichtung (303) zum Zählen des Synchronsignals aufweist, wobei die Steuereinrichtung bewirkt, daß die Aufzeichnungseinrichtung gemäß dem Ausgangssignal der Zähleinrichtung den vorbestimmten Abstand erzeugt.

12. Gerät nach Anspruch 1, in dem die Aufzeichnungseinrichtung die Daten unter Hin- und Herbewegen des Aufzeichnungsträgers aufzeichnet.

13. Gerät nach Anspruch 1, in dem der Aufzeichnungsträger kartenförmig ist.

14. Informationsaufzeichnungsverfahren, das

(i) den Schritt zum optischen Aufzeichnen von Datenspuren auf einer optischen Karte,

(ii) den Schritt zum optischen Aufzeichnen von von den Datenspuren gesonderten Leitinformationsspuren auf der optischen Karte und

(iii) den Schritt zum optischen Lesen der auf den Datenspuren und den Leitinformationsspuren aufgezeichneten Daten umfaßt,

**dadurch gekennzeichnet,** daß

a) die Daten auf nichtformatierte Leitinformationsspuren aufgezeichnet werden.

b) die Anzahl der Informationseinheiten in jeder Leitinformationsspur erfaßt wird und

c) das weitere Aufzeichnen von Leitinformationen auf einer Leitinformationsspur entsprechend der erfaßten Anzahl von Einheiten in der Weise gesteuert wird, daß benachbarte Leitinformationen einander nicht überlappen und daß zwischen benachbarten Leitinformationen ein vorbestimmter Abstand ist.

15. Optische Karte, die mit dem Gerät nach Anspruch 1 oder nach dem Verfahren nach Anspruch 14 beschriftet ist.

**Revendications**

1. Appareil d'enregistrement d'informations du type comportant :

(i) des moyens (303, 305, 7) destinés à enregistrer optiquement des pistes de données sur une carte optique ;

(ii) des moyens (303, 305, 7) destinés à enregistrer optiquement des pistes répertoires séparées des pistes de données sur la carte optique ;

(iii) des moyens (13, 305, 303) destinés à lire optiquement les données enregistrées sur les pistes de données et les pistes répertoires ;

caractérisé en ce que les moyens d'enregistrement sont adaptés à une utilisation pour :

a) enregistrer des données sur des pistes répertoires non formatées ;

b) détecter (315) le nombre d'unités d'informations dans chaque piste répertoire ; et

c) commander (303) l'enregistrement supplémentaire d'informations de répertoire dans une piste repertoire en fonction du nombre détecté d'unités de manière que des répertoires adjacents ne se chevauchent pas et qu'il y ait un intervalle prédéterminé entre des répertoires adjacents.

2. Appareil selon la revendication 1, dans lequel lesdits moyens de commande dirigent lesdits moyens d'enregistrement de façon à enregistrer une information de répertoire en une position espacée d'une distance prédéterminée d'une information de répertoire précédemment enregistrée sur le support d'enregistrement.

3. Appareil selon la revendication 1, dans lequel lesdits moyens de détection comptent le nombre d'informations de répertoire enregistrées sur une seule piste.

4. Appareil selon la revendication 1, dans lequel lesdits moyens de détection comptent le nombre d'intervalles parmi lesdites informations de répertoire enregistrées sur une seule piste.

5. Appareil selon la revendication 1, dans lequel l'unité d'informations de répertoire comprend une information d'adresse indiquant le piste d'enregistrement d'informations dans laquelle les données sortant desdits premiers moyens de sortie ont été stockées.

6. Appareil selon la revendication 1, dans lequel, lorsque le nombre d'unités d'informations de répertoire enregistrées dans une seule piste est inférieur à un nombre prédéterminé, lesdits moyens de commande amènent lesdits moyens d'enregistrement à enregistrer une information de répertoire dans ladite piste.

7. Appareil selon la revendication 6, dans lequel lesdits moyens de commande amènent lesdits moyens de détection à balayer la piste, et amènent lesdits moyens d'enregistrement à enregistrer l'information de répertoire après l'établissement d'un intervalle de la distance prédéterminée dans le cas où le nombre d'informations de répertoire dans la piste détecté durant l'opération de balayage coïncide avec un nombre prédéterminé.

8. Appareil selon la revendication 1, dans lequel, lorsque le nombre d'informations de répertoire enregistrées dans une seule piste est un nombre prédéterminé, lesdits moyens de commande amènent lesdits moyens d'enregistrement à enregistrer l'information de répertoire dans une piste différente.

9. Appareil selon la revendication 8, dans lequel lesdits moyens de commande amènent lesdits moyens d'enregistrement à enregistrer l'information de répertoire en tête de la piste différente.

10. Appareil selon la revendication 1, dans lequel lesdits moyens de commande, après avoir dirigé lesdits moyens d'enregistrement afin qu'ils enregistrent l'information de répertoire, reproduisent l'information de répertoire enregistrée et détectent si une erreur est présente ou non.

11. Appareil selon la revendication 1, comportant en outre des moyens d'entraînement (24, 450, 451) destinés à entrainer le support d'enregistrement, des moyens de génération (440) destinée à générer un signal de synchronisation qui est en synchronisme avec le fonctionnement desdits moyens d'entraînement, et des moyens de comptage (303) destinés à compter le signal de synchronisation, lesdits moyens de commande amenant lesdits moyens d'enregistrement à produire la distance prédéterminée sur la base du signal de sortie desdits moyens de comptage.

12. Appareil selon la revendication 1, dans lequel lesdits moyens d'enregistrement enregistrent des données en faisant exécuter un mouvement alternatif au support d'enregistrement.

13. Appareil selon la revendication 1, dans lequel le support d'enregistrement présente une forme analogue à une carte.

14. Procédé d'enregistrement d'informations du type comprenant :
      (i) l'étape qui consiste à enregistrer optiquement des pistes de données sur une carte optique ;
      (ii) l'étape qui consiste à enregistrer optiquement des pistes répertoires séparées des pistes de données sur la carte optique ;
      (iii) l'étape qui consiste à lire optiquement les données enregistrées sur les pistes de données et les pistes répertoires ;
       caractérisé en ce que :
      a) les données sont enregistrées sur des pistes répertoires non formatées ;
      b) le nombre d'unités d'informations dans chaque piste répertoire est détecté ; et
      c) la poursuite de l'enregistrement d'informations de répertoire dans une piste répertoire est commandée en fonction du nombre détecté d'unités de manière que des répertoires adjacents ne se chevauchent pas et qu'il y ait un intervalle prédéterminé entre des répertoires adjacents.

15. Carte optique enregistrée par l'appareil selon la revendication 1 ou le procédé selon la revendication 14.

# FIG. 1A

# FIG.1B

# FIG.2

# FIG. 3

# FIG. 4

305-8

315-1

315-2

305-4

# F I G . 5

```
        ┌─────────────────┐
        │  ADDITION TO    │
        │   DIRECTORY     │
        └────────┬────────┘
                 │
        ┌────────▼────────┐
        │  MOVE IN THE    │──── SI
        │  DIRECTION F    │
        └────────┬────────┘
                 │
        ┌────────▼────────┐
        │ COUNT THE NUMBER│
        │ OF PULSES IN    │──── S2
        │ SIGNAL 315-1    │
        └────────┬────────┘
                 │
        ┌────────▼────────┐
        │  MOVE IN THE    │
        │  DIRECTION      │──── S3
        │  OPPOSITE TO    │
        │  DIRECTION F    │
        └────────┬────────┘
                 │
         ┌───────▼────────┐
    YES  │ IS THE NUMBER  │
   ◄─────│ OF PULSES      │──── S4
         │ IN SIGNAL 315-1│
         │    THREE ?     │
         └───────┬────────┘
                 │ NO
   ┌ ─ ─ ─ ─ ─ ┐
     DIRECTORY
   │  FULL     │
              ┌────────▼────────┐
   │          ││  MOVE IN THE   │──── S5
     CHANGE    │  DIRECTION F   │
   │  TRACK   │└────────┬────────┘
   └ ─ ─ ─ ─ ─ ┘        │
                 │
        ┌────────▼────────┐
        │  COUNT THE      │──── S6
        │  NUMBER IN      │
        │  SIGNAL 315-1   │
        └────────┬────────┘
                 │
         ┌───────▼────────┐
    NO   │ IS THE NUMBER  │
   ◄─────│ OF PULSES IN   │
         │ SIGNAL 315-1   │──── S7
         │ EQUAL TO       │
         │ PREVIOUSLY     │
         │ STORED ONE ?   │
         └───────┬────────┘
                 │ YES
         ┌───────▼────────┐
    NO   │ THE CONTENT IN │
   ◄─────│ SIGNAL 315-2   │──── S8
         │   TRAILS ?     │
         └───────┬────────┘
                 │ YES
        ┌────────▼────────┐
        │ WRITE DIRECTORY │──── S9
        │ INFORMATON      │
        └─────────────────┘
```

15

# FIG.6

EP 0 251 666 B1

EP 0 251 666 B1

FIG.7

17

FIG.8